# EUROPEAN PATENT SPECIFICATION

(11) **EP 2 660 045 B1**
(45) Date of publication and mention of the grant of the patent: **15.03.2017**
(21) Application number: 13166148.0
(22) Date of filing: 01.05.2013
(51) Int. Cl.: B32B 17/10, B60S 1/04

(54) **A laminated glazing with a member bonded thereto**
Laminierte Verglasung mit einem daran festgeklebten Element
Vitrage stratifié avec élément lié à celui-ci

(30) Priority: 04.05.2012 GB 201207867
(43) Date of publication of application: 06.11.2013
(73) Proprietor: Pilkington Group Limited, Nr. Ormskirk Lancashire L40 5UF (GB)
(72) Inventor: Artama, Juha, 33101 Tampere (FI); Talasmäki, Jukka, 33101 Tampere (FI); Jonsson, Dirk, 33101 Tampere (FI)
(74) Representative: Pettet, Nicholas Edward

(56) References cited:
- EP-A1- 2 418 727
- DE-A1-102008 045 793
- GB-A- 2 271 139
- US-A- 4 124 367
- US-A- 5 398 452
- US-A1- 2006 101 737
- US-A1- 2010 059 253
- "Cayenne Diesel - Das Modell in Daten", Porsche Austria GmbH & Co. OG , April 2009 (2009-04), pages 1-28, XP002710716, Retrieved from the Internet: URL:http://box.motorline.cc/autowelt/pdf/p orsche_cayenne_diesel.pdf [retrieved on 2013-08-08]

## Description

The present invention relates to a laminated glazing with a mounting plate attached to it. More particularly the glazing may be a window for a vehicle or building, and the mounting plate may be for an accessory or a piece of equipment which is ancillary to the window, e.g. a wiper assembly, an antenna, a lock or catch, or a support strut for an opening window. Where the glazing is a vehicle window, the vehicle may be a ship or land vehicle. In the latter case, the vehicle may be a rail vehicle, a bus or a low-speed off-road vehicle, especially a heavy vehicle such as an agricultural vehicle, a construction vehicle, a quarry vehicle or a mining vehicle. The present invention also relates to a vehicle incorporating said glazing and the use of said glazing.

There has been a continuing increase over the years in the amount of equipment provided on vehicles. Moreover, vehicle manufacturers have developed a preference for vehicle components to be supplied as major assemblies, incorporating several smaller components, as this facilitates assembly of the vehicle on the production line. This also applies to vehicle windows, and consequently, there is an increasing need for accessories or auxiliary equipment to be attached to glass sheets.
For instance, EP 532 384 A1 discloses a vehicle window, especially a rear window with a wiper assembly bonded to it by adhesive. The window is monolithic, i.e. it comprises a single sheet of glass, which is not laminated, but toughened.
EP 1 334 855 B1 describes a glass sheet with a member attached to it by adhesive. The member may be a mounting plate, and the adhesive is applied in a particular configuration designed to reduce the likelihood of breakage of the glass, or detachment of the member, due to the differential thermal expansion of the different components. Again, the glass sheet is monolithic, comprising a single sheet of toughened glass.

It should be noted that most windows are in fact monolithic. Laminated glass is considerably more expensive than monolithic glass, and so it is only used when its superior safety characteristics are required. For instance, in the case of cars, it is generally required that the windscreen be made of laminated glass in order to obtain type approval. However, the windscreens of low-speed off-road heavy vehicles such as agricultural vehicles, construction vehicles, quarry vehicles or mining vehicles are not laminated.

It would be beneficial to improve the safety of such glazings, particularly in the case where at least one hole is required that extends entirely through the glazing, i.e. a through-hole. However, the presence of a through-hole in a laminated glass weakens it, and may be a source of failure if the glass is stressed. Attempts have been made to mitigate this effect.
US 4,124,367 discloses a method of fabricating a laminated windscreen having a hole for the shaft of a windshield wiper. No details are provided of how the wiper is attached.
US 5,398,452 discloses a metal retaining or fixing member fixed to a laminated glazing with the aid of a screwed assembly. Each of the glass sheets forming the laminated glazing is provided with a hole before being assembled with thermoplastic interlayer. The holes are of different diameters and the glazing is assembled with the holes eccentric with respect to one another. A threaded screw is inserted into the hole as part of the screwed assembly.
US 2010/0059253 A1 discloses a laminated glass sheet with a through-hole into which a fixing device is introduced. The through-hole is made up of holes of different sizes in the two glass sheets of the lamination. The fixing device includes at least two parts introduced into the through-hole, pressing against surfaces around the edge of the through-hole. The invention is particularly suitable for antennas.

The above attempts have not been found entirely satisfactory, and so it would be desirable to provide a laminated glazing including a through-hole with a member attached in such a way that the weakening effect of the hole is minimised.

According to a first aspect of the present invention there is provided a laminated glazing comprising first and second plies of glass and a ply of interlayer, the ply of interlayer extending between the plies of glass,
wherein each ply contains a hole, the holes in the plies being aligned to form a single continuous through-hole extending through the plies of glass and interlayer,
characterised in that the holes are of the same size and share the same outline, and at least one member in the form of a mounting plate is attached to a surface of the glazing and occupies an area of that surface, the mounting plate being positioned on that surface so that the through-hole is within the area occupied by the mounting plate,
wherein the mounting plate is attached to the surface of the glazing by adhesive, the adhesive being provided in discrete elongate areas adjacent the periphery of the mounting plate.

The invention provides a simpler form of construction which is easy to assemble, and proves surprisingly durable in service, as the glass around the holes is subject to less stress.

Preferably, the holes are aligned along a common axis. It is particularly preferred that the holes are cylindrical holes of the same diameter and the common axis is the axis of rotation of the cylindrical holes.

The mounting plate may be positioned so that the through-hole is within a central region of the area occupied by the mounting plate. Preferably, the mounting plate does not extend into any of the holes in the plies. This facilitates stress reduction in the region of the holes, it having been found beneficial to distance the points of attachment of the mounting plate from the holes as much as possible.

The invention is particularly suitable for a laminated glazing in which the mounting plate is spaced from the periphery of the glazing and is entirely supported by the glazing. It is in such glazings that a through-hole may especially be required.

The mounting plate is adhesively bonded to the glazing. The use of adhesive instead of mechanical fixing avoids the need for further through-holes for screws and bolts or the like. Positioning the adhesive adjacent the periphery of the mounting plate enables the points of attachment provided by the adhesive to be positioned as far as possible from the hole.

In a preferred embodiment of the invention, the mounting plate is in the form of a disc, and the adhesive is provided in beads which extend along circular arcs which are generally parallel to the periphery of the disc. This maximises the adhesive bond while not adding to the stresses on the glass around the through-hole. Normally the mounting plate will include a hole which is aligned with the through-hole in the laminated glazing.

It is advantageous to provide one or more spacers between the mounting plate and the surface of the glazing. This ensures a minimum thickness of adhesive by preventing it from being squeezed out during assembly. The spacers may be incorporated into the mounting plate, or may be separate items. They may conveniently be pieces of spacing tape.

In a particularly preferred embodiment of the invention, the mounting plate is for a wiper assembly comprising a wiper motor connected to a power source, a shaft driven by the motor, a wiper arm mounted on the shaft and a wiper blade mounted on the arm; wherein the mounting plate is perforated by a hole through which the shaft passes, and the mounting plate comprises attachment points to which the wiper assembly is attached, either directly or indirectly. The shaft may substantially fill the through-hole, subject to sufficient clearance remaining to allow the shaft to rotate freely.

This embodiment utilises the stress-reduction characteristics of the invention to the full, since a wiper assembly is inevitably a source of stresses. This is particularly the case when the wiper assembly is mounted on the glazing, given that the reaction to the wiper motor rotating the shaft, arm and blade in one direction is for the latter items to exert a moment on the wiper motor, and hence its mountings, in the opposite direction.

In the case of particularly large laminated glazings, the wiper assembly may be a circular wiper assembly, i.e. one arranged to rotate the wiper blade through a full circle, thereby wiping a large annular area. The wiper may reciprocate, or rotate continuously in a single sense.

The laminated glazing of the invention may be intended for a low-speed off-road vehicle such as an agricultural vehicle, a construction vehicle, a quarry vehicle or a mining vehicle.

The invention also relates to a building or vehicle incorporating a laminated glazing according to the invention, particularly a vehicle of the types mentioned above.

According to a second aspect of the invention, there is provided a laminated glazing comprising
an outer ply of glass;
an inner ply of glass;
at least one ply of an interlayer material;
at least one mounting plate attached to an external major surface of the inner ply of glass; wherein said mounting plate occupies an area;
wherein the at least one ply of an interlayer material is laminated between the outer and inner plies of glass; and
wherein the glazing has only one hole that extends entirely through the outer ply of glass, the inner ply of glass and the at least one ply of an interlayer material, in the projection of the area of the mounting plate on the plane of the inner pane.

The provision of a laminated glazing rather than a monolithic glazing improves impact resistance and the glazing is better able to retain its integrity in the event of fracture. This has the benefit that the laminated construction affords better occupant retention due to the presence of the interlayer. Also, it is less likely for the fragments of glass to cause serious injury because they will tend to stick to the interlayer. Furthermore, the presence of only one hole extending entirely through the glazing in the area of the mounting plate ensures that the glazing is not unduly weakened by providing further such holes which would be a source of stress cracking.

In the following discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The outer and/or inner plies of glass may be annealed, heat-strengthened or semi-toughened glass. Annealed and semi-toughened glass plies are more fragile than toughened glass plies. Therefore the avoidance of a further hole extending entirely through the glazing in the area of the mounting plate provides, in comparison with toughened glass plies, greater advantages in the case of semi-toughened glass plies, and even greater advantages in the case of annealed glass plies. Additionally, semi-toughened glass plies and, even more so, annealed glass plies, are easier to manufacture than toughened glass plies.

Preferably the hole that extends entirely through the outer ply of glass, the inner ply of glass and the at least one ply of an interlayer material, in the projection of the area of the mounting plate on the plane of the inner ply is located in a central region of the projection of said area. In the context of the present invention the term "central region of the projection of said area" means the area defined by locating the point of the external major surface of the inner ply of glass that is approximately equidistant from the periphery of the projection of said area and forming an area that is enclosed by the distance halfway between said point and the periphery of the projection of said area. Preferably said hole is located in the centre of the projection of said area. Preferably the hole is substantially circular. Preferably the diameter of the hole is at least 10 mm, more preferably at least 15 mm, even more preferably at least 18 mm, but preferably at most 40 mm, more preferably at most 30 mm, even more preferably at most 25 mm.

It is preferable for the areas of adhesive to be selected such that they are on opposite sides of the overall centre of gravity of the mounting plate together with any item attached to the mounting plate. The moment of force which the weight of the mounting plate and any attached item exerts on the adhesion points is thereby minimised.

Preferably the areas of adhesive are located less than 20 mm, more preferably less than 15 mm, even more preferably less than 10 mm from the periphery of a surface of the mounting plate that is bonded to the inner ply of glass. Such an arrangement helps to conceal the adhesive in order to protect the adhesive and improve the aesthetic appearance of the glazing. At least one of the areas of adhesive is elongate. Preferably said at least one elongate area of adhesive has a length and said length extends generally equidistant from the periphery of the surface of the mounting plate that is bonded to the inner ply of glass. Preferably said at least one area of adhesive has a width and said width is at least 2 mm, more preferably at least 5 mm and even more preferably at least 7 mm, but preferably at most 30 mm, more preferably at most 15 mm, even more preferably at most 10 mm. Preferably the areas of adhesive are located substantially equidistant from the periphery of the surface of the mounting plate that is bonded to the inner ply of glass.

Preferably the adhesive is a structural adhesive, i.e. one that is rigid, inelastic and non-deformable when set. Structural adhesives are capable of bearing loads of great magnitude, which may be greater than the weight of the bonded parts. The adhesive is preferably soft enough to minimise the stress on the glass, but provide enough rigidity for the particular purpose of the mounting plate. While elastic adhesives are able to accommodate a certain degree of differential thermal expansion owing to their flexibility, the very fact that they flex means that they are not suitable for applications where there is a tight tolerance on the positioning of the mounting plate to be bonded, or where the mounting plate is to be mounted in a rigid and immobile fashion. The adhesive may be an epoxy, acrylic, polyol, polyester, isocyanate, vinyl, styrene, butadiene and/or polyurethane-containing adhesive. The adhesive may be a Henkel Terolan (RTM) adhesive such as Terolan 1510 (RTM).

Preferably the glazing further comprises one or more pieces of spacer tape located between the inner ply of glass and the mounting plate. The use of tape as a spacer helps to ensure the correct thickness for the adhesive and hold the mounting plate in the correct position during a curing cycle. The pieces of spacer tape are preferably bonded to at least one of the inner ply of glass and the mounting plate. Preferably the pieces of spacer tape are located at or adjacent the periphery of a surface of the mounting plate that is bonded to the inner ply of glass. The spacer tape may be a 3M (RTM) tape. The pieces of spacer tape preferably each have a surface area of at least 5 mm², more preferably at least 15 mm², even more preferably at least 20 mm², but preferably at most 100 mm², more preferably at most 50 mm², even more preferably at most 30 mm². Preferably the pieces of spacer tape have a thickness of at least 0.1 mm, more preferably at least 0.3 mm, even more preferably at least 0.4 mm, but preferably at most 1.0 mm, more preferably at most 0.7 mm, even more preferably at most 0.6 mm.

Preferably the pieces of spacer tape are substantially circular. In alternative embodiments the pieces of spacer tape may be substantially square or rectangular.

Preferably a surface of the mounting plate that is attached to the inner ply of glass corresponds in shape substantially to the shape of the inner ply of glass over the area of the mounting plate. Preferably the inner ply of glass is of moderate curvature, and so the mounting plate has at least one flat, or approximately flat surface. The mounting plate may be in the form of a generally flat plate. Preferably the mounting plate is substantially disc-shaped. Alternatively the mounting plate may be substantially square, rectangular, triangular, oval, or any other suitable shape. The diameter of the mounting plate, or the distance between the two farthest points at the periphery of a surface of the mounting plate which is attached to the inner ply of glass, is preferably at least 50 mm, more preferably at least 90 mm, even more preferably at least 110 mm, but preferably at most 250 mm, more preferably at most 150 mm, even more preferably at most 130 mm. It is advantageous to provide a mounting plate that is large enough to perform a particular function but small enough to avoid being detrimental to the view through the glazing. The material of which the mounting plate is composed is preferably metal, e.g. mild steel with a suitable anti-corrosive surface treatment, such as the application of paint, a powder coating or a plating. Alternatively the material of which the mounting plate is composed may be plastic or any other suitable material.

The glazing may further comprise an adapter attached to the mounting plate. The adapter preferably has substantially the same shape as the mounting plate. Preferably the adapter is substantially disc-shaped. The adapter preferably has at least one hole that extends entirely through the adapter. Preferably at least one of said holes in the adapter is located in substantially the same location as the holes that extend entirely through the glazing and the mounting plate in the projection of the area of the mounting plate on the plane of the inner ply. The adapter may be attached to the mounting plate via one or more screws, adhesive or any other suitable means. In a preferred embodiment the adapter is attached to the mounting plate via one or more screws secured in correspondingly threaded holes located in or adjacent a periphery of the mounting plate. Preferably the correspondingly threaded holes of the mounting plate are located in the rim of the mounting plate. The correspondingly threaded holes of the mounting plate are preferably located in protrusions of the rim of the mounting plate. Said one or more screws may also secure in correspondingly threaded holes located in the adapter.

Furthermore, preferably the adapter is attached to the wiper motor. The adapter may be attached to the wiper motor via a plurality of screws secured in correspondingly threaded holes located in the adapter. Preferably the rotary shaft extends entirely through the at least one hole that extends entirely through the adapter.

A power source is connected to the wiper motor by conductive means, such as one or more conductive wires. In some embodiments the conductive means is solely connected to the glazing at the wiper motor. In a preferred embodiment the power source to the wiper motor is provided by conductive means located between the plies of glass or attached to an external surface of the inner or outer ply of glass. This arrangement is beneficial because it allows the wiper motor to be mounted separately from e.g. the bodywork of a vehicle without the necessity for conspicuous and potentially dangerous hanging wires. Preferably the conductive means is located between the plies of glass. This arrangement affords protection for the conductive means which is in contrast with the conductive means being attached to an external surface of the inner or outer ply of glass, in which case additional protection would likely be necessary. When the conductive means is located between the plies of glass the at least one ply of an interlayer material may be thinner or not present where the conductive means is located. Such an arrangement is advantageous because it helps to accommodate the conductive means and avoid unwanted delamination or bubbles developing.

Preferably the conductive means comprises one or more strips of conductive foil. Preferably the conductive foil provides a conductive pathway from the periphery of the glazing to the wiper motor. The conductive foil may be composed of aluminium, copper, nickel-coated copper, silver, or any other suitable conductive material. Alternative conductive means that may be used include a conductive print e.g. silver print, conductive wires or a conductive coating e.g. a silver coating.

Preferably the mounting plate is not in contact with the periphery of the glazing. Such an arrangement is beneficial if the mounting plate is for a wiper assembly, particularly a circular wiper assembly, because it enables the wiper to wipe a large surface area, affording better visibility for an operator, without the need for a large wiper blade or blades. For instance, the wiper may be able to wipe near to almost the entire periphery of the glazing, e.g. by the wiper blade travelling through 360 degrees as in a circular wiper assembly. The mounting plate may be spaced apart from the periphery of the glazing by at least 5 cm, preferably at least 15 cm, even more preferably at least 30 cm. Preferably the mounting plate is located in a central region of the glazing. In the context of the present invention the term "central region of the glazing" means the area defined by locating the point of the external major surface of the inner ply of glass that is approximately equidistant from the periphery of said inner ply and forming an area that is enclosed by the distance halfway between said point and the periphery of said ply.

Where the wiper assembly is a circular wiper assembly it is preferred that the mounting plate is bonded to an external major surface of the inner ply of glass by adhesive. The use of adhesive is beneficial because, in the case of a circular wiper assembly, the mounting plate is not in contact with the periphery of the glazing and therefore cannot be supported by, for instance, the bodywork of a vehicle or a frame. As alluded to above, the stresses and rotational forces which arise as a result of the rotary shaft passing through said hole in the glazing could result in stress cracks if further holes were introduced in order to attach the mounting plate. The use of adhesive avoids the necessity to introduce such further holes.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention will now be further described by way of the following specific embodiments, which are given by way of illustration and not of limitation, with reference to the accompanying drawings in which:
**Fig. 1** shows a laminated glazing in accordance with the present invention bearing a mounting plate attached to a circular wiper assembly;
**Fig. 2** is an exploded view showing a mounting plate, an adapter and a wiper motor; and
**Fig. 3** shows a mounting plate in accordance with the present invention with discrete areas of adhesive bonded to it.

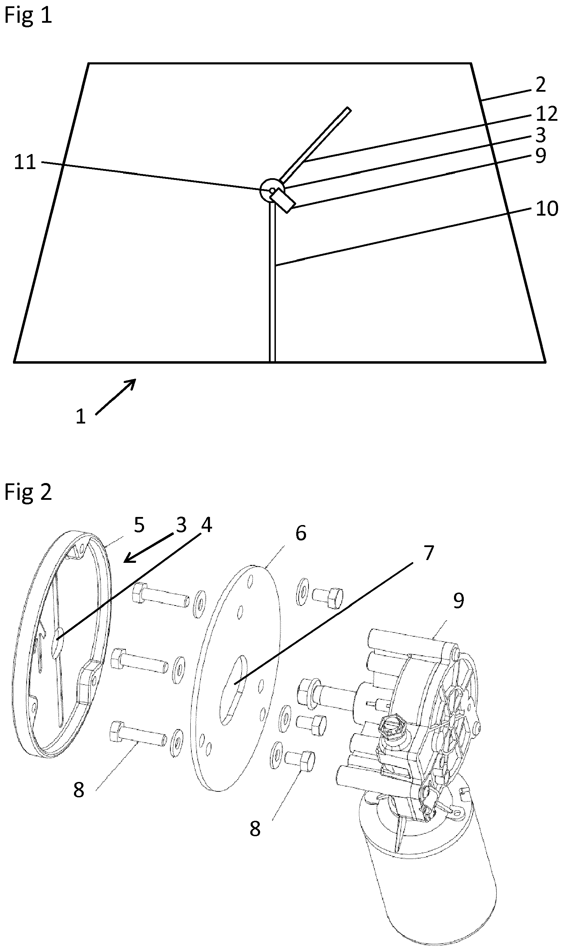

Fig. 1 shows a laminated glazing 1 comprising first and second laminated annealed glass plies 2 with a member in the form of a disc-shaped mounting plate 3 bonded to a central region of the exposed surface of the inner ply. The terms inner and outer are used with reference to the space enclosed by the structure of which the glazing forms part, e.g. a building or a vehicle interior. The glazing 1 has a single through-hole (not shown) in the projection of the area of the mounting plate 3 on the plane of the inner ply, and said hole is located in a central region of the projection of said area. The hole is circular and its diameter is 20 mm.

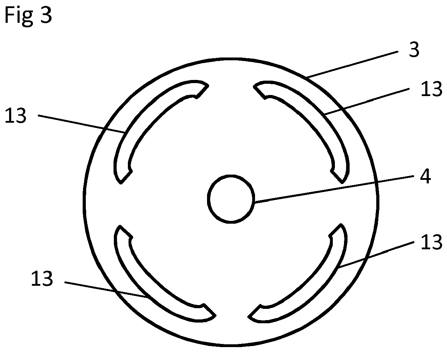

Fig. 3 shows the mounting plate 3 in more detail. It is bonded to the inner ply by adhesive 13 provided on four discrete areas of the mounting plate 3 located approximately 25 mm from the periphery of the surface of the mounting plate 3 that is bonded to the inner ply. The areas of adhesive 13 are elongate and extend generally equidistant from the periphery of the surface of the mounting plate 3. Each area of adhesive has a width of approximately 8 mm. The adhesive 13 is a Henkel Terolan 1510 (RTM) adhesive. The glazing 1 further comprises four circular pieces of 3M (RTM) spacer tape (not shown) located between the inner ply of glass and the mounting plate 3 and adjacent the periphery of the surface of the mounting plate 3 that is bonded to the inner ply. The pieces of spacer tape each have a surface area of 25 mm² and a thickness of 0.5 mm.

Referring to Figs 1, 2 and 3, in this embodiment the glazing 1 is a vehicle windscreen. The surface of the mounting plate 3 that is attached to the inner ply of glass corresponds in shape substantially to the shape of the inner ply of glass over the area of the mounting plate 3. The inner ply of glass is of moderate curvature, and the mounting plate 3 has at least one approximately flat surface. The mounting plate 3 (as shown in Figures 1 and 2) is substantially disc-shaped. The diameter of the mounting plate 3 is approximately 120 mm. The material of which the mounting plate 3 is composed is metal.

The mounting plate 3 has a substantially circular hole 4 that extends entirely through the mounting plate 3 (see Figures 2 and 3). Said hole 4 in the mounting plate 3 is located in substantially the same location as the hole that extends entirely through the glazing 1 in the projection of the area of the mounting plate 3 on the plane of the inner ply.

Figure 2 shows the mounting plate, adapter and wiper motor assembly. The mounting plate 3 comprises an upstanding wall or rim 5. The rim 5 extends substantially perpendicularly to the plane of the disc-shaped mounting plate 3. Figure 2 also shows an adapter 6 to be attached to the mounting plate 3. The adapter 6 has substantially the same disc shape as the mounting plate 3. The adapter 6 has a hole 7 that extends entirely through the adapter 6 and is located in substantially the same location as the hole 4 that extends entirely through the mounting plate 3. The adapter 6 is attached to the mounting plate 3 via a plurality of bolts 8 secured in correspondingly threaded holes located in protrusions of the rim 5 of the mounting plate 3 and located in the adapter 6. The adapter 6 is attached to the wiper motor 9 (including any gearbox required) via a plurality of bolts 8 secured in correspondingly threaded holes located in the adapter 6.

The mounting plate 3 in Figure 1 is connected to a circular wiper assembly, i.e. one which rotates through a full circle. The wiper assembly includes a wiper motor 9 connected to a power source provided by a nickel-coated strip of copper foil 10, a rotary shaft 11, and a wiper arm and blade 12. The wiper motor 9 is attached to the mounting plate 3 and the rotary shaft 11. The rotary shaft 11 extends entirely through the hole that extends entirely through the glazing 1 and the hole 4 that extends entirely through the mounting plate 3. The wiper arm is connected to the wiper blade 12 and the rotary shaft 11 such that the wiper blade 12 is arranged to contact the external major surface of the outer ply of glass. The wiper motor 9 is capable of driving the rotation of the rotary shaft 11 about its major axis, causing the wiper blade 12 to wipe a substantially annular or ring-shaped area of the external major surface of the outer ply of glass.An end of the wiper arm is connected to an end of the rotary shaft 11 and the wiper arm and the rotary shaft 11 are substantially perpendicularly connected. The power source 10 is located between the plies of glass and the ply of an interlayer material is thinner where the power source 10 is located. The power source 10 provides a conductive pathway from the periphery of the glazing 1 to the wiper motor 9.

## Claims

1. A laminated glazing (1) comprising first and second plies (2) of glass and a ply of interlayer, the ply of interlayer extending between the plies (2) of glass,
wherein each ply contains a hole, the holes in the plies (2) being aligned to form a single continuous through-hole extending through the plies (2) of glass and interlayer, **characterised in that** the holes are of the same size and share the same outline, and at least one mounting plate (3) is attached to a surface of the glazing (1) and occupies an area of that surface, the mounting plate (3) being positioned on that surface so that the through-hole is within the area occupied by the mounting plate,
wherein the mounting plate (3) is attached to the surface of the glazing (1) by adhesive (13), the adhesive being provided in discrete elongate areas adjacent the periphery of the mounting plate (3).

2. A laminated glazing as claimed in claim 1, wherein the holes are aligned along a common axis.

3. A laminated glazing as claimed in claim 2, wherein the holes are cylindrical holes of the same diameter and the common axis is the axis of rotation of the cylindrical holes.

4. A laminated glazing as claimed in any preceding claim, wherein the mounting plate (3) is positioned so that the through-hole is within a central region of the area occupied by the mounting plate (3).

5. A laminated glazing as claimed in any preceding claim, wherein the mounting plate (3) does not extend into any of the holes in the plies (2).

6. A laminated glazing as claimed in any preceding claim, wherein the mounting plate (3) is spaced from the periphery of the glazing (1) and is entirely supported by the glazing (1).

7. A laminated glazing as claimed in any preceding claim, wherein the discrete elongate areas of adhesive (13) extend generally equidistant from the periphery of the surface of the mounting plate (3).

8. A laminated glazing as claimed in any preceding claim , wherein the mounting plate is in the form of a disc, and the adhesive is provided in beads which extend along circular arcs which are generally parallel to the periphery of the disc.

9. A laminated glazing as claimed in any preceding claim, wherein one or more spacers are provided between the mounting plate (3) and the surface of the glazing (1).

10. A laminated glazing as claimed in claim 8, wherein the mounting plate (3) is for a wiper assembly comprising a wiper motor (9) connected to a power source, a shaft (11) driven by the motor, a wiper arm mounted on the shaft and a wiper blade (12) mounted on the arm; and wherein the mounting plate (3) is perforated by a hole (4) through which the shaft (11) passes, the mounting plate (3) comprising attachment points to which the wiper assembly is attached, either directly or indirectly.

11. A laminated glazing as claimed in claim 10, wherein the shaft (11) substantially fills the through-hole, subject to sufficient clearance remaining to allow the shaft to rotate freely.

12. A laminated glazing as claimed in claim 10 or claim 11, wherein the wiper assembly is a circular wiper assembly, i.e. one arranged to rotate the wiper blade (12) through a full circle.

13. A laminated glazing as claimed in any preceding claim, the glazing (1) being intended for one of the following types of off-road vehicle: an agricultural vehicle, a construction vehicle, a quarry vehicle or a mining vehicle.

14. A vehicle incorporating a laminated glazing (1) as claimed in any preceding claim.

## Patentansprüche

1. Laminierte Verglasung (1), die eine erste und eine zweite Glaslage (2) und eine Zwischenschichtlage umfasst, wobei sich die Zwischenschichtlage zwischen den Glaslagen (2) erstreckt, wobei jede Lage ein Loch enthält, wobei die Löcher in den Lagen (2) so ausgerichtet sind, dass sie ein einziges kontinuierliches Durchgangsloch bilden, das sich durch die Glaslagen (2) und die Zwischenschichtlage erstreckt,
**dadurch gekennzeichnet, dass** die Löcher die gleiche Größe aufweisen und miteinander die gleiche Kontur teilen und mindestens eine Montageplatte (3) an einer Fläche der Verglasung (1) befestigt ist und einen Bereich dieser Fläche einnimmt, wobei die Montageplatte (3) so auf dieser Fläche positioniert ist, dass sich das Durchgangsloch innerhalb des Bereichs befindet, den die Montageplatte einnimmt,
wobei die Montageplatte (3) durch Klebstoff (13) an der Fläche der Verglasung (1) befestigt ist, wobei der Klebstoff in voneinander getrennten länglichen Bereichen benachbart zum Rand der Montageplatte (3) vorgesehen ist.

2. Laminierte Verglasung nach Anspruch 1, wobei die Löcher entlang einer gemeinsamen Achse ausgerichtet sind.

3. Laminierte Verglasung nach Anspruch 2, wobei die Löcher zylindrische Löcher mit gleichem Durchmesser sind und die gemeinsame Achse die Drehachse der zylindrischen Löcher ist.

4. Laminierte Verglasung nach einem der vorhergehenden Ansprüche, wobei die Montageplatte (3) so positioniert ist, dass das Durchgangsloch in einem zentralen Bereich des Bereichs liegt, den die Montageplatte einnimmt.

5. Laminierte Verglasung nach einem der vorhergehenden Ansprüche, wobei sich die Montageplatte (3) nicht in eines der Löcher in den Lagen (2) erstreckt.

6. Laminierte Verglasung nach einem der vorhergehenden Ansprüche, wobei die Montageplatte (3) vom Rand der Verglasung (1) beabstandet ist und vollständig von der Verglasung (1) getragen wird.

7. Laminierte Verglasung nach einem der vorhergehenden Ansprüche, wobei sich die voneinander getrennten länglichen Klebstoffbereiche (13) im Allgemeinen äquidistant zum Rand der Fläche der Montageplatte (3) erstrecken.

8. Laminierte Verglasung nach einem der vorhergehenden Ansprüche, wobei die Montageplatte in Form einer Scheibe vorliegt und der Klebstoff in Kügelchen vorgesehen ist, die sich entlang von Kreisbögen erstrecken, die im Allgemeinen parallel zum Rand der Scheibe verlaufen.

9. Laminierte Verglasung nach einem der vorhergehenden Ansprüche, wobei ein oder mehrere Abstandshalter zwischen der Montageplatte (3) und der Fläche der Verglasung (1) vorgesehen sind.

10. Laminierte Verglasung nach Anspruch 8, wobei die Montageplatte (3) für eine Wischeranordnung vorgesehen ist, die einen Wischermotor (9), der mit einer Stromquelle verbunden ist, eine Welle (11), die von dem Motor angetrieben wird, einen Wischerarm, der auf der Welle montiert ist, und ein Wischerblatt (12), das auf dem Arm montiert ist, umfasst; und wobei die Montageplatte (3) durch ein Loch (4) perforiert ist, durch das die Welle (11) hindurchtritt, wobei die Montageplatte (3) Befestigungspunkte umfasst, an denen die Wischeranordnung entweder direkt oder indirekt befestigt ist.

11. Laminierte Verglasung nach Anspruch 10, wobei die Welle (11) das Durchgangsloch im Wesentlichen ausfüllt vorbehaltlich eines verbleibenden Spalts, der das freie Drehen der Welle ermöglicht.

12. Laminierte Verglasung nach Anspruch 10 oder Anspruch 11, wobei die Wischeranordnung eine kreisförmige Wischeranordnung ist, d. h. eine Wischeranordnung, die dafür eingerichtet ist, das Wischerblatt (12) um einen vollen Kreis zu drehen.

13. Laminierte Verglasung nach einem der vorhergehenden Ansprüche, wobei die Verglasung (1) für einen der folgenden Geländefahrzeugtypen vorgesehen ist: ein landwirtschaftliches Nutzfahrzeug, ein Baufahrzeug, ein Steinbruchfahrzeug oder ein Bergbaufahrzeug.

14. Fahrzeug, das eine laminierte Verglasung (1) nach einem der vorhergehenden Ansprüche umfasst.

## Revendications

1. Vitrage stratifié (1) comprenant des première et seconde épaisseurs (2) de verre et une épaisseur de couche intermédiaire, l'épaisseur de couche intermédiaire s'étendant entre les épaisseurs (2) de verre,
dans lequel chaque épaisseur contient un trou, les trous dans les épaisseurs (2) étant alignés pour former un seul trou débouchant continu s'étendant à travers les épaisseurs (2) de verre et la couche intermédiaire, **caractérisé en ce que** les trous ont la même dimension et partagent le même contour, et au moins une plaque de montage (3) est fixée sur une surface du vitrage (1) et occupe une zone de cette surface, la plaque de montage (3) étant positionnée sur cette surface de sorte que le trou débouchant est dans la zone occupée par la plaque de montage,
dans lequel la plaque de montage (3) est fixée à la surface du vitrage (1) par un adhésif (13), l'adhésif étant prévu dans des zones allongées discrètes adjacentes à la périphérie de la plaque de montage (3).

2. Vitrage stratifié selon la revendication 1, dans lequel les trous sont alignés le long d'un axe commun.

3. Vitrage stratifié selon la revendication 2, dans lequel les trous sont des trous cylindriques du même diamètre et l'axe commun est l'axe de rotation des trous cylindriques.

4. Vitrage stratifié selon l'une quelconque des revendications précédentes, dans lequel la plaque de montage (3) est positionnée de sorte que le trou débouchant est à l'intérieur d'une région centrale de la zone occupée par la plaque de montage (3).

5. Vitrage stratifié selon l'une quelconque des revendications précédentes, dans lequel la plaque de montage (3) ne s'étend pas dans l'un quelconque des trous dans les épaisseurs (2).

6. Vitrage stratifié selon l'une quelconque des revendications précédentes, dans lequel la plaque de montage (3) est espacée de la périphérie du vitrage (1) et est complètement supportée par le vitrage (1).

7. Vitrage stratifié selon l'une quelconque des revendications précédentes, dans lequel les zones allongées discrètes d'adhésif (13) s'étendent généralement à équidistance de la périphérie de la surface de la plaque de montage (3).

8. Vitrage stratifié selon l'une quelconque des revendications précédentes, dans lequel la plaque de montage se présente sous la forme d'un disque, et l'adhésif est prévu dans des bourrelets qui s'étendent le long d'arcs circulaires qui sont généralement parallèles à la périphérie du disque.

9. Vitrage stratifié selon l'une quelconque des revendications précédentes, dans lequel un ou plusieurs dispositifs d'espacement sont prévus entre la plaque de montage (3) et la surface du vitrage (1).

10. Vitrage stratifié selon la revendication 8, dans lequel la plaque de montage (3) est prévue pour un ensemble d'essuie-glace comprenant un moteur d'essuie-glace (9) raccordé à une source de puissance, un arbre (11) entraîné par le moteur, un bras d'essuie-glace monté sur l'arbre et un balai d'essuie-glace (12) monté sur le bras ; et dans lequel la plaque de montage (3) est perforée par un trou (4) à travers lequel l'arbre (11) passe, la plaque de montage (3) comprenant des points de fixation auxquels l'ensemble d'essuie-glace est fixé, directement ou indirectement.

11. Vitrage stratifié selon la revendication 10, dans lequel l'arbre (11) remplit sensiblement le trou débouchant, soumis au jeu suffisant restant pour permettre à l'arbre de tourner librement.

12. Vitrage stratifié selon la revendication 10 ou la revendication 11, dans lequel l'ensemble d'essuie-glace est un ensemble d'essuie-glace circulaire, c'est-à-dire un ensemble agencé pour faire tourner le balai d'essuie-glace (12) sur un cercle complet.

13. Vitrage stratifié selon l'une quelconque des revendications précédentes, le vitrage (1) étant prévu pour l'un des types suivants de véhicule tout-terrain : un véhicule agricole, un engin de chantier, un véhicule de carrière ou un véhicule d'exploitation minière.

14. Véhicule comprenant le vitrage stratifié (1) selon l'une quelconque des revendications précédentes.
